Europäisches Patentamt

European Patent Office

Office européen des brevets

(11) Veröffentlichungsnummer: 0 185 929
A2

# (12) EUROPÄISCHE PATENTANMELDUNG

(21) Anmeldenummer: 85114760.3

(22) Anmeldetag: 21.11.85

(51) Int. Cl.⁴: **H04Q 3/60** , H04M 7/14

(30) Priorität: 21.12.84 DE 3446925

(43) Veröffentlichungstag der Anmeldung:
02.07.86 Patentblatt 86/27

(84) Benannte Vertragsstaaten:
AT BE CH DE FR GB IT LI NL SE

(71) Anmelder: **Siemens Aktiengesellschaft
Berlin und München Wittelsbacherplatz 2
D-8000 München 2(DE)**

(72) Erfinder: **Wegmann, Gerhard, Ing. grad.
Herterichstrasse 32
D-8000 München 71(DE)**
Erfinder: **Wetzel, Hans-Gerd, Dipl.-Ing. (FH)
Planeggerstrasse 26
D-8000 München 60(DE)**

(54) Schaltungsanordnung für Fernmeldevermittlungsanlagen, insbesondere Fernsprechvermittlungsanlagen, mit an Vermittlungsstellen über Leitungsbündel angeschlossene Untervermittlungsstellen.

(57) Ursprungsverbindungen mit Wartemöglichkeit sind gegenüber Zielverbindungen ohne Wartemöglichkeit, die also im Bündelbesetztfall zu Verlust gehen, bei ihrer Durchschaltung bevorzugt. Durch eine Reservierung von Leitungen für die Zielverbindungen wird eine Verkehrsverdrängung von Zielverbindungen durch Ursprungsverbindungen teilweise oder ganz vermieden, wodurch die Effektivität der für die Verbindungsherstellung vorgesehenen zentralen Steuerungseinrichtungen und des Verbindungsleitungsnetzes hinsichtlich ihrer Verkehrsleistung gesteigert wird (Vermeidung von Verlust hinsichtlich solcher Verbindungen, für die bereits Steuerungsarbeit geleistet worden ist).Besondere Bedeutung für Überlast- und Schieflastsituation (Abwehrsteuerung).

Schaltungsanordnung für Fernmeldevermittlungsanlagen, insbesondere Fernsprechvermittlungsanlagen, mit an Vermittlungsstellen über Leitungsbündel angeschlossene Untervermittlungsstellen

Die Erfindung betrifft eine Schaltungsanordnung für Fernmeldevermittlungsanlagen, insbesondere Fernsprechvermittlungsanlagen, in denen an eine Vermittlungsstelle eine Untervermittlungsstelle, insbesondere ein Konzentrator, über ein Bündel von verbindungsindividuellen Leitungen angeschlossen ist, die in der einen Verbindungsaufbaurichtung und in der anderen Verbindungsaufbaurichtung und wenigstens teilweise alternativ sowohl in der einen als auch in der anderen Verbindungsaufbaurichtung belegbar sind, und in denen für von an die betreffende Untervermittlungsstelle angeschlossenen Endstellen, z.B. Teilnehmerstellen, her initiierten Ursprungsverbindungen, die in der einen Verbindungsaufbaurichtung herzustellen sind, bei Belegtsein der bereitgestellten Leitungen Wartemöglichkeit besteht, jedoch nicht - zumindest in wesentlich geringerem Ausmaß - für Zielverbindungen zu diesen an die betreffende Untervermittlungsstelle angeschlossenen Endstellen, z.B. Teilnehmerstellen.

Eine Schaltungsanordnung dieser Art ist bereits durch die Zeitschrift "telcom report" (englischsprachige Ausgabe) special issue, Volume 5, No.4, Dec. 1982, S.262 - 266 bekannt. Die zuvor genannte Wartemöglichkeit ist normalerweise zeitlich begrenzt auf einen für den praktischen Betrieb angemessenen Umfang. Diese Wartemöglichkeit erhöht bekanntlich die Verkehrsleistung eines Konzentrators. Sie läßt sich in relativ einfacher Weise realisieren, indem die Anschaltung des Wähltones für einen Teilnehmer, der eine Verbindung herzustellen wünscht, entsprechend der jeweiligen Betriebssituation sofort oder etwas verspätet durchgeführt wird, und zwar jeweils immer erst dann, wenn eine entsprechende Leitung für eine beabsichtigte Verbindungsherstellung verfügbar ist. An dieser Stelle sei bemerkt, daß es sich bei den genannten Leitungen auch jeweils um ein Kanalpaar eines PCM-Zeitmultiplexsystems oder anderen Digitalsystems Digitalsystems handeln kann. Endstellen können Fernsprech-Teilnehmerstellen, Datenendgeräte und Endgeräte jeder anderen Art sein.

Bei den genannten Ursprungsverbindungen handelt es sich also jeweils um Durchschaltvorgänge zu Beginn eines Verbindungsaufbaues. Beim Ursprungsverkehr in der angegebenen Weise eine Wartemöglichkeit vorzusehen, ist relativ einfach und ohne besonderen Aufwand realisierbar. Wie erwähnt, braucht dem jeweils rufenden Teilnehmer nur der Wählton entsprechend später zugeschaltet zu werden. Dagegen würde eine vergleichbare Wartemöglichkeit auch bei Zielverbindungen eine vorübergehende Speicherung dieser Belegungen einschließlich deren Wählinformationen und/oder Steuerungsinformationen oder dergleichen voraussetzen.

Ist in dem erläuterten Zusammenhang das betrachtete Leitungsbündel stark ausgelastet, so treten vermehrt Besetztfälle auf. Davon werden hauptsächlich - mangels der erwähnten Wartemöglichkeit - die Durchschalteversuche für Zielverbindungen betroffen. Sofern Verbindungen zu Verlust gehen müssen, ist es an sich einerlei,zu welchem Zeitpunkt einer Verbindungsherstellung ein Besetztfall eintritt. Hinsichtlich der Verkehrsleistung des gesamten Verbindungsleitungsnetzes und hinsichtlich des Bedienungskomforts ist es indessen günstiger, wenn Besetztfälle, soweit diese nicht vermeidbar sind, bei Verbindungsherstellungsversuchen jeweils bereits zu einem möglichst frühem Zeitpunkt eintreten. Abgesehen davon aber ist es für die Leistungsfähigkeit des Verbindungsleitungsnetzes als auch der informationsverarbeitenden Steuerungseinrichtungen der Gesamtheit der miteinander verbundenen Fernmeldevermittlungsstellen günstiger, wenn unter der Voraussetzung, daß Verbindungen überlastungsbedingt zu Verlust gehen müssen, solche Verbindungen zu Verlust gehen, für die jeweils weniger Arbeit an Informationstionsverarbeitungs- und Steuerungsvorgängen geleistet worden ist, als solche Verbindungen, für die schon relativ viel diesbezügliche Arbeit erbracht werden mußte.

Für die Erfindung besteht die Aufgabe, bei einer Schaltungsanordnung der eingangs angegebenen Art die Effektivität der Leistungsfähigkeit des Verbindungsleitungsnetzes und der informationsverarbeitenden Steuerungseinrichtungen, die der Abwicklung des Vermittlungsbetriebes dienen, zu steigern.

Die Erfindung löst die gestellte Aufgabe dadurch, daß eine Beschränkung der Suche und Auswahl jeweils einer freien Leitung bei Durchschaltungsaufträgen für Ursprungsverbindungen auf weniger Leitungen als bei Durchschaltungsaufträgen für Zielverbindungen einige - wenigstens eine - dieser Leitungen für eine Durchschaltung nur von Zielverbindungen reserviert sind, wodurch eine Verkehrsverdrängung von Zielverbindungen durch Ursprungsverbindungen teilweise oder ganz unterbunden ist.

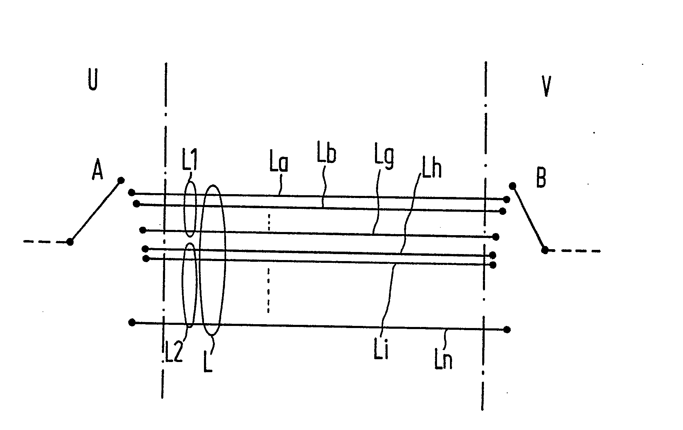

In der Zeichnung ist ein Ausführungsbeispiel der Erfindung nur in wesentlich zu ihrem Verständnis beitragenden Bestandteilen dargestellt. Die Beschreibung geht davon aus, daß Fernmeldevermittlungsanlagen bekannt sind, in denen an eine Vermittlungsstelle Untervermittlungsstellen über je ein Bündel von verbindungsindividuellen Leitungen angeschlossen sind. Fernsprechvermittlungsanlagen dieser Art, bei denen es sich um Konzentratoren als Untervermittlungsstellen handelt, sind durch die DE-OS 30 16 511, 30 16 547 und 32 24 459, sowie durch die darin angegebene Literatur bekannt. Es erübrigt sich deshalb, Fernsprechvermittlungsanlagen mit Untervermittlungsstellen in ihrer Gesamtheit zu beschreiben.

In der Zeichnung ist eine Vermittlungsstelle V und eine als Konzentrator ausgebildete Untervermittlungsstelle U angedeutet, sowie ein Bündel von Verbindungsleitungen L. Diese Verbindungsleitungen sind jeweils zur Durchschaltung einer Verbindung verbindungsindividuell belegbar. Jede dieser Verbindungsleitungen dient zur Nachrichtenübertragung in beiden Richtungen. Sind diese Verbindungsleitungen durch ein mehrkanäliges Übertragungssystem, zum Beispiel PCM-System ralisiert, so gehören jeweils zu einer "Verbindungsleitung" in an sich bekannter Weise zwei Übertragungskanäle, und zwar je einer für je eine der beiden Nachrichtenübertragungsrichtungen. In diesem Falle ist eine Verbindungsleitung also durch ein Kanalpaar realisiert. Zwecks Vereinfachung ist anschließend in der Beschreibung jedoch vorwiegend von "Verbindungsleitungen" (oder "Leitungen") die Rede .

Die Verbindungsleitungen L in der Zeichnung sind jeweils in der einen Verbindungsaufbaurichtung, zum Beispiel von einer an den Konzentrator U angeschlossenen Teilnehmerstelle stelle zur Vermittlungsstelle V hin und in der anderen Verbindungsaufbaurichtung, also von der Vermittlungsstelle V zu einer an den Konzentrator U angeschlossenen Teilnehmerstelle hin verbindungsindividuell belegbar. Zur Auswahl einer freien Leitung sind Auswahleinrichtungen A und B im Konzentrator U und in der Vermittlungsstelle V vorgesehen. Die Verbindungsleitungen dienen also zur Verbindungsherstellung in beiden Verbindungsaufbaurichtungen. Ein Teil der Verbindungsleitungen kann für Verbindungsherstellungsvorgänge nur in der einen Verbindungsaufbaurichtung vorgesehen sein. Ebenso kann ein Teil von Verbindungsleitungen für Verbindungsherstellungsvorgänge nur in der anderen Verbindungsaufbaurichtung vorgesehen sein. Darüber hinaus kann die Gesamtheit oder nur ein Teil der Verbindungsleitungen für Verbindungsherstellungsvorgänge sowohl in der einen als auch in der anderen Verbindungsaufbaurichtung vorgesehen sein; dies bedeutet aber bekanntlich zugleich, daß eine Verbindungsleitung jeweils für eine Verbindungsherstellung immer nur in einer der beiden Verbindungsherstellungsrichtungen belegt werden kann. Für die Verwendung der Verbindungsleitungen für Verbindungsherstellungsvorgänge unter Berücksichtigung der Verbindungsherstellungsrichtungen bestehen verschiedene Möglichkeiten, auf die weiter unten noch im einzelnen eingegangen wird.

Wie es für Vermittlungsstellen und an diese angeschlossene Konzentratoren bekannt ist, besteht für Konzentratorteilnehmer, also für an einen Konzentrator U angeschlossene Teilnehmerstellen bei Initiierung jeweils eines Verbindungsherstellungsvorganges Wartemöglichkeit. Diese Wartemöglichkeit kann in bekannter Weise unbegrenzt oder zeitlich begrenzt sein. Wünscht ein Konzentratorteilnehmer eine Verbindung herzustellen, so schließt er durch Abnehmen des Handapparates an seiner Teilnehmerstation die Teilnehmerleitungsschleife. Dies wird im Konzentrator in bekannter Weise erkannt, und mit Hilfe der Auswahleinrichtung A wird eine freie Verbindungsleitung gesucht. Ist eine freie Verbindungsleitung gefunden, so wird die Teilnehmerstation im Konzentrator U mit dieser Verbindungsleitung und weiterhin über dieselbe in der Vermittlungsstelle V mit einer freien Wahlkennzeichen-Empfangseinrichtung verbunden. Von hier wird Wählton zu der betreffenden Teilnehmerstation hin ausgesendet, woraufhin der Teilnehmer mit der Abgabe der aus den einzelnen aufeinander folgenden Ziffern bestehenden Wahlinformation beginnen kann. Die Wahlinformationen werden mit Hilfe der Wahlkennzeichen-Empfangseinrichtung aufgenommen und dienen zur Herstellung der jeweils gewählten Verbindung.

Die angesprochene Wartemöglichkeit ist also in sehr einfacher Weise realisierbar. Findet sich nach Abnehmen des Handapparates an der genannten Teilnehmerstelle nicht unmittelbar eine freie Verbindungsleitung, so kann der Auswahlvorgang solange fortgesetzt werden, bis eine Verbindungsleitung wieder frei wird (zum Beispiel durch Auslösung einer zu früherem Zeitpunkt durchgeschalteten Verbindung), oder es kann bei einem Besetztsein aller Verbindungsleitungen der Auswahlvorgang verhindert oder angehalten werden, um bei Freiwerden einer Verbindungsleitung mittels einer alle Verbindungsleitungen auf ihren Belegungszustand überwachenden Leitungsüberwachungseinrichtung, z.B. durch eine Eintragung der freien Leitungen eines Bündels in einen "Frei-Speicher", der nach dem FIFO-Prinzip abgearbeitet wird, erneut angelassen zu werden. Auswahleinrichtungen, die in dieser Weise betrieben werden, dürfen als in der Fachwelt bereits vielfältig bekannt vorausgesetzt werden.

Die zuvor beschriebene Wartemöglichkeit für Teilnehmer, die eine Verbindungsherstellung beginnen wollen, kann zweckmäßig zeitlich begrenzt sein. Hierzu kann eine Zeitüberwachungseinrichtung vorgesehen werden, die die Dauer jeweils eines Auswahlvorganges abmißt und zeitlich begrenzt, indem bei einer Zeitüberschreitung der betreffende Auswahlvorgang abgebrochen und an die Teilnehmerleitung der betreffenden Teilnehmerstation ein Besetztsignal, zum Beispiel Besetztton, im Konzentrator U angeschaltet wird.

Die Auswahlvorgänge können in an sich bekannter Weise so ablaufen, daß eine entsprechend ausgebildete Auswahleinrichtung immer sämtliche Verbindungsleitungen nacheinander oder immer alle Verbindungsleitungen gleichzeitig auf ihren Belegungszustand prüft, das heißt ob sie jeweils frei oder besetzt sind. Oder es kann eine Auswahleinrichtung vorgesehen werden, die einerseits alle Verbindungsleitungen eines Teilbündels L1 und andererseits alle Verbindungsleitungen eines anderen Teilbündels L2 jeweils nacheinander oder vorzugsweise gleichzeitig auf ihren Belegungszustand prüft, aber die Verbindungsleitungen dieser beiden Teilbündel unabhängig voneinander prüft, was wiederum bezüglich der beiden Teilbündel gleichzeitig oder nacheinander geschehen kann.

Eine von einer der an den Konzentrator U angeschlossenen Teilnehmerstationen über eine der Verbindungsleitungen zur Vermittlungsstelle V hin durchgeschaltete Teilverbindung ist eine Ursprungsverbindung. Ist eine Verbindung bereits bis zur Vermittlungsstelle V hin durchgeschaltet und wird sie zu einer Teilnehmer-Teilnehmer-Verbindung dadurch vervollständigt, daß die weitere Verbindungsdurchschaltung über eine Verbindungsleitung zum Konzentrator U und in diesem zu einem angewählten Konzentratorteilnehmer hin erfolgt, so handelt es sich bei diesem letzten Abschnitt der Verbindungsherstellung um eine Zielverbindung. Wie zuvor ausgeführt wurde, besteht für Ursprungsverbindungen eine Wartemöglichkeit, jedoch nicht für Zielverbindungen. Wird eine Verbindung bis zur Vermittlungsstelle V hin aufgebaut (hierbei kann es sich um eine nacheinander über Ortsvermittlungsstellen hergestellte Ortsverbindung oder auch um eine Fernverbindung oder eine Auslandsverbindung handeln), und ist der betreffende Verbindungsaufbau durch Durchschaltung einer Zielverbindung zu einem Konzentratorteilnehmer, dessen Teilnehmerstation also an den Konzentrator U angeschlossen ist, zu vervollständigen, so würde eine Wartemöglichkeit bei der Auswahl einer freien Leitung mittels der Auswahleinrichtung B es erforderlich machen, daß entsprechende Steuerungsinformationen zwischengespeichert werden. Im allgemeinen ist eine Wartemöglichkeit für Zielverbindungen nicht vorgesehen (oder nur in einem vergleichsweise sehr geringen Ausmaß).

Durch die zuvor beschriebene Wartemöglichkeit, die für Ursprungsverbindungen gegeben ist, dagegen nicht für Zielverbindungen, ergibt sich zunächst eine gewisse Priorisierung von Ursprungsverbindungen gegenüber Zielverbindungen hinsichtlich der Auswahl und Zurverfügungstellung jeweils einer freien Verbindungsleitung. In diesem Zusammenhang ist nun von Bedeutung, daß der jeweils für eine Ursprungsverbindung bereits geleistete Arbeitsaufwand an Informationsaufnahme- und -verarbeitungsvorgängen sowie von hierzu nötigen Steuerungs- und Einstellvorgängen noch relativ sehr gering ist. Handelt es sich dagegen um eine Zielverbindung, die zu einem Konzentratorteilnehmer hin durchzuschalten ist, so ist für die Verbindungsherstellung bis zur Vermittlungsstelle V hin bereits ein erheblicher Aufwand an Informationsaufnahme- und -verarbeitungsvorgängen sowie von Steuer- und Einstellvorgängen geleistet worden, und zwar - soweit es sich um programmgesteuerte Vermittlungsanlagen handelt - in hohem Maße von entsprechenden zentralen oder dezentralen Verarbeitungs-, Steuerungs- und Einstelleinrichtungen. Darüber hinaus ist zwischen der in diesem Falle fernen Ursprungsvermittlungsstelle und der Zielvermittlungsstelle (V) in jedem Leitungsabschnitt bereits eine Verbindungsleitung für den betreffenden Verbindungsaufbau in Anspruch genommen worden, also insgesamt eine beachtliche Anzahl von Verbindungsleitungen.

Um nun der oben angesprochenen unerwünschten Priorisierung von Ursprungsverbindungen gegenüber Zielverbindungen bei der Auswahl jeweils einer freien Verbindungsleitung zu begegnen (dies gilt besonders bei Überlast und/oder Schieflast), ist erfindungsgemäß vorgesehen, daß eine Beschränkung der Suche und Auswahl jeweils einer freien Leitung bei Durchschaltungsaufträgen für Ursprungsverbindungen auf weniger Leitungen als bei Durchschaltungsaufträgen für Zielverbindungen einige - wenigstens eine - dieser Verbindungsleitungen für eine Durchschaltung nur von Zielverbindungen reserviert sind, wodurch eine Verkehrsverdrängung von Zielverbindungen durch Ursprungsverbindungen teilweise oder ganz unterbunden ist. Durch diese Beschränkung wird also einer unerwünschten Priorisierung von Ursprungsverbindungen gegenüber Zielverbindungen entgegengewirkt, wodurch eine Einbuße von Arbeitsleistung, die von Informationsaufnahme- und -verarbeitungseinrichtungen sowie von Steuerungs- und Einstelleinrichtungen bereits erbracht worden ist, weitestgehend vermieden wird.

Für eine technische Realisierung der angegebenen Beschränkung bestehen verschiedene Möglichkeiten. Wie aus der Zeichnung ersichtlich, ist das Bündel von Verbindungsleitungen L , die zwischen dem Konzentrator U und der ihm übergeordneten Vermittlungsstelle V verlaufen, in zwei Teilbündel L1 und L2 unterteilt. Das Teilbündel L1 umfaßt die Leitungen La bis Lg, während das Teilbündel L2 die Leitungen Lh bis Ln umfaßt. Es kann nun vorgesehen werden, daß von sämtlichen Leitungen L nur ein Teil für die Suche bei Durchschaltungsaufträgen für Ursprungsverbindungen zur Auswahl steht. Es kann also zum Beispiel vorgesehen werden, daß für die Duchschaltung von Ursprungsverbindungen nur die Leitungen des Teilbündels L2 zur Verfügung stehen, während sämtliche Leitungen für die Durchschaltung von Zielverbindungen zur Verfügung stehen. Dabei kann die Absuchreihenfolge in der Weise festgelegt werden, wie es sich aus der Zeichnung ergibt, also in der Weise, daß bei Zielverbindungen immer zuerst die Leitungen des Teilbündels L1 abgesucht werden und danach die Leitungen des Teilbündels L2, während bei Ursprungsverbindungen immer nur die Leitungen des Teilbündels L2, nicht aber die Leitungen des Teilbündels L1 abgesucht werden können.

Es ist aber auch möglich, die Absuchreihenfolge umgekehrt festzulegen, so daß also bei Zielverbindungen immer zuerst die Leitungen des Teilbündels L2 und dann die Leitungen des Teilbündels L1 abgesucht werden, während bei Ursprungsverbindungen immer nur die Leitungen des Teilbündels L2 zur Auswahl stehen, wohingegen die Leitungen des Teilbündels L1 hierbei nicht zur Auswahl zur Verfügung stehen.

Es besteht auch noch die weitere Möglichkeit, daß von sämtlichen Leitungen nur ein Teil für die Suche bei Durchschaltungsaufträgen für Zielverbindungen zur Auswahl steht, und daß von sämtlichen Leitungen ein demgegenüber kleinerer Teil für die Suche bei Durchschaltungsaufträgen für Ursprungsverbindungen zur Auswahl steht. In diesem Falle sind also Verbindungsleitungen von drei verschiedenen Kategorien vorgesehen. Die Verbindungsleitungen einer ersten Kategorie stehen für die Durchschaltung sowohl von Ursprungsverbindungen als auch für die Durchschaltung von Zielverbindungen zur Auswahl zur Verfügung. Hierbei handelt es sich um den größten Teil der Verbindungsleitungen L. Die Leitungen einer zweiten Kategorie stehen zusätzlich nur bei einer Durchschaltung von Zielverbindungen zur Auswahl zur Verfügung. Die Leitungen einer dritten Kategorie stehen zusätzlich nur bei Ursprungsverbindungen für die Auswahl zur Verfügung. Insgesamt stehen dabei für die Durchschaltung von Zielverbindungen mehr Verbindungsleitungen zur Verfügung als für die Durchschaltung von Ursprungsverbindungen. Auch hierbei sind die verschiedensten Absuchreihenfolgen bei der Auswahl der obengenannten drei Teilbündel (3 Kategorien) möglich und optimal auswählbar.

Eine weitere Möglichkeit besteht darin, daß für die Suche einer freien Leitung bei Durchschaltungsaufträgen für Ursprungsverbindungen von den jeweils insgesamt vorhandenen Verbindungsleitungen eine wenigstens um eins geringere Anzahl dieser Leitungen zur Auswahl steht (Prinzip der "begrenzten Erreichbarkeit"), wobei für unterschiedliche Teilnehmergruppen am Konzentrator oder an der Untervermittlungsstelle immer einige (wenigstens eine der) Leitungen nicht zugänglich sind (diese sind den verschiedenen Teilnehmergruppen von Teilnehmergruppe zu Teilnehmergruppe immer wieder andere Leitungen!). Bei Durchschaltung von Zielverbindungen mögen sämtliche Verbindungsleitungen zur Auswahl stehen, dagegen bei Durchschaltung von Ursprungsverbindungen eine geringere Anzahl, wobei diese Anzahl wenigstens um 1 kleiner ist als die Anzahl der zum jeweiligen Zeitpunkt gerade freien Verbindungsleitungen.

Eine weitere Möglichkeit besteht darin, daß eine allen Verbindungsleitungen gemeinsame, nicht gezeigte Überwachungseinrichtung vorgesehen wird ("Frei-Speicher"), in der zu jedem Zeitpunkt erfaßt ist, wieviele Verbindungsleitungen - es sei angenommen, daß es sich jeweils um eine Anzahl von N Verbindungsleitungen handelt - zu jedem Zeitpunkt jeweils fürei sind, und daß eine Anzahl von n freien Verbindungsleitungen (wobei n mindestens 1 ist) für Zielverbindungen reserviert bleiben. Für Zielverbindungen stehen dann also jederzeit N Verbindungsleitungen und für Ursprungsverbindungen jederzeit N minus n Verbindungsleitungen zur Suche und Auswahl zur Verfügung. Die Zahl N ist dabei also eine gemäß der sich laufend ändernden Betriebssituation stets wechselnde Größe, während die Zahl n ein gleichbleibender Wert ist. Die Tatsache, daß für Ursprungsverbindungen jederzeit immer nur weniger zur Zeit fürei Verbindungsleitungen zur Verfügung gestellt sind, als für Zielverbindungen, bedeutet also praktisch, daß aus dem "Frei-Speicher" jeweils nur dann eine fürei Verbindungsleitung für die Herstellung jeweils einer Ursprungsverbindung ausgelesen (füreigegeben) wird, wenn die aktuelle Zahl von N freien Verbindungsleitungen größer als die Zahl von n für Zielverbindungen reservierten Verbindungsleitungen ist. Dadurch ist also die Anzahl von Verbindungsleitungen, die zur Durchschaltung einer Ursprungsverbindung zur Auswahl zur Verfügung stehen, mehr oder minder eingeschränkt. Auch durch diese Realisierungsform der Erfindung wird einer unerwünschten Priorisierung von Ursprungsverbindungen gegenüber Zielverbindungen entgegengewirkt, und es wird ein nachträglicher Verlust von bereits geleisteter Arbeit an Informationsaufnahme- und -verarbeitungsvorgängen sowie an Steuerungsvorgängen und Einstellvorgängen vermieden.

Die angesprochene Priorisierung des Ursprungsverkehrs aufgrund seiner Wartemöglichkeit macht sich in der angegebenen Weise besonders störend in den häufig auftretenden Fällen von planerisch nicht vorher erfaßbarer Schieflast ("Verkehrsschiefe",vergl. NTG-Empfehlung 0903, Nr. 443 in der Nachrichtentechnischen Zeitschrift, Band 37/1984, Heft 7, Seite 465 ff) und bei Überlast sehr nachteilig bemerkbar, wobei letztere im allgemeinen zu einem überproportionalen Ansteigen des Ursprungsverkehrs gegenüber dem Zielverkehr, also ebenfalls zu Schieflast führt. Dieser gesteigerten Benachteiligung des Zielverkehrs kann zusätzlich entgegengewirkt werden, indem in Abhängigkeit vom Verkehrsund/oder Belegungsangebot der beiden genannten Verkehre (mittels entsprechender an sich bekannter Meßeinrichtungen erfaßbar) die Anzahl der für den Zielverkehr in der oben beschriebenen Weise reservierten Leitungen den momentanen Verkehrsverhältnissen so angepaßt wird, daß eine Benachteiligung des Zielverkehrs vermieden wird.

**Ansprüche**

1. Schaltungsanordnung für Fernmeldevermittlungsanlagen, insbesondere Fernsprechvermittlungsanlagen, in denen an eine Vermittlungsstelle eine Untervermittlungsstelle, insbesondere ein Konzentrator, über ein Bündel von verbindungsindividuellen Leitungen angeschlossen ist, die in der einen Verbindungsaufbaurichtung und in der anderen Verbindungsaufbaurichtung und wenigstens teilweise alternativ sowohl in der einen als auch in der anderen Verbindungsaufbaurichtung belegbar sind, und in denen für von an die betreffende Untervermittlungsstelle angeschlossenen Endstellen, z.B.Teilnehmerstellen, her initiierten Ursprungsverbindungen, die in der einen Verbindungsaufbaurichtung herzustellen sind, bei Belegtsein der bereitgestellten Leitungen Wartemöglichkeit besteht, jedoch nicht - zumindest in wesentlich geringerem Ausmaß - für Zielverbindungen zu diesen an die betreffende Untervermittlungsstelle angeschlossenen Endstellen, z.B. Teilnehmerstellen, **dadurch gekennzeichnet,** daß eine Beschränkung der Suche und Auswahl jeweils einer freien Leitung bei Durchschaltungsaufträgen für Ursprungsverbindungen auf weniger Leitungen als bei Durchschaltungsaufträgen für Zielverbindungen einige - wenigstens eine - dieser Leitungen für eine Durchschaltung nur von Zielverbindungen reserviert sind, wodurch eine Verkehrsverdrängung von Zielverbindungen durch Ursprungsverbindungen teilweise oder ganz unterbunden ist.

2. Schaltungsanordnung nach Anspruch 1, **dadurch gekennzeichnet,** daß von sämtlichen Leitungen nur ein Teil für die Suche bei Durchschaltungsaufträgen für Ursprungsverbindungen zur Auswahl stehen.

3. Schaltungsanordnung nach Anspruch 2, **dadurch gekennzeichnet,** daß von sämtlichen Leitungen nur ein Teil für die Suche bei Durchschaltungsaufträgen für Zielverbindungen zur Auswahl stehen, und daß von sämtlichen Leitungen ein demgegenüber kleinerer Teil für die Suche bei Durchschaltungsaufträgen für Ursprungsverbindungen zur Auswahl stehen.

4. Schaltungsanordnung nach einem der vorhergehenden Ansprüche, **dadurch gekennzeichnet,** daß für die Suche einer freien Leitung bei Durchschaltungsaufträgen für Ursprungsverbindungen jeweils eine wenigstens um eins geringere Anzahl dieser Leitungen gegenüber Durchschaltungsaufträgen für Zielverbindungen zur Auswahl steht (Prinzip der begrenzten Erreichbarkeit).

5. Schaltungsanordnung nach einem der vorhergehenden Ansprüche, **dadurch gekennzeichnet,** daß für die Suche einer freien Leitung bei Durchschaltungsaufträgen für Ursprungsverbindungen von den jeweils momentan insgesamt freien Leitungen eine wenigstens um eins geringere Anzahl dieser Leitungen zur Auswahl steht.

6. Schaltungsanordnung nach Anspruch 1, **dadurch gekennzeichnet,** daß eine Anpassung der reservierten Leitungen an den momentanen Leitungs-Bedarf für Ursprungs- und Zielverbindungen in Abhängigkeit vom Verkehrs- und/oder Belegungsangebot, das mittels entsprechender Meßeinrichtungen erfaßbar ist, steuerbar ist.

U                                                                    V

A        L1        La      Lb      Lg      Lh                B

L2        L                          Li        Ln